# EUROPÄISCHE PATENTSCHRIFT

(11) **EP 4 463 361 B1**
(45) Veröffentlichungstag und Bekanntmachung des Hinweises auf die Patenterteilung: **01.10.2025**
(21) Anmeldenummer: 22840177.4
(22) Anmeldetag: 20.12.2022
(51) Int. Cl.: B62M 6/55, B62M 11/14, B62M 11/18, F16H 1/46

(54) **FAHRRADANTRIEB UND FAHRRAD**
BICYCLE DRIVE AND BICYCLE
ENTRAÎNEMENT DE BICYCLETTE ET BICYCLETTE

(30) Priorität: 10.01.2022 DE 102022200148
(43) Veröffentlichungstag der Anmeldung: 20.11.2024
(73) Patentinhaber: ZF Friedrichshafen AG, 88046 Friedrichshafen (DE)
(72) Erfinder: ZIEMER, Peter, 86825 Bad Woerishofen (DE)
(74) Vertreter: ZF Friedrichshafen AG
(86) Internationale Anmeldenummer: PCT/EP2022/086981
(87) Internationale Veröffentlichungsnummer: WO 2023/131517

(56) Entgegenhaltungen:
- DE-A1- 102016 207 000
- DE-A1- 102017 213 305
- DE-A1- 102018 217 093

## Beschreibung

### Technisches Gebiet

Die vorliegende Erfindung betrifft einen Fahrradantrieb mit einer Elektromaschine und einem Planetengetriebe. Zudem betrifft die Erfindung ein Fahrrad mit einem solchen Fahrradantrieb.

### Stand der Technik

Aus dem Stand der Technik sind Fahrradantriebe mit verschiedenen Getriebekonfigurationen und einer Elektromaschine bekannt. Der Fahrradantrieb soll effizient eine Antriebsleistung am Laufrad bereitstellen, um beispielsweise mit einer Batterie eine möglichst hohe Reichweite zu erzielen. Für eine kompakte und kostengünstige Gestaltung ist zudem eine hohe Übersetzung bei der Übertragung von einem an einer Abtriebswelle der Elektromaschine bereitgestellten Antriebsleistung an ein Laufrad eines Fahrrads gewünscht. Insgesamt ist es bei Fahrradantriebe wünschenswert, wenn diese leicht, kostengünstig und robust sind.

DE 10 2018 217 093 A1 betrifft eine Antriebsanordnung eines Pedelecs mit einer manuellen Antriebswelle und mit einer ersten elektrischen Maschine sowie mit einer zweiten elektrischen Maschine, wobei die erste elektrische Maschine koaxial zur manuellen Antriebswelle angeordnet ist, wobei die zweite elektrische Maschine achsparallel zur manuellen Antriebswelle angeordnet ist, wobei die manuelle Antriebswelle und die erste elektrische Maschine über ein erstes Wellgetriebe mit einem Abtrieb gekoppelt sind, und wobei die zweite elektrische Maschine über ein mehrstufiges Übersetzungsgetriebe mit konstanter Übersetzung mit der manuellen Antriebswelle gekoppelt ist.

DE 10 2017 213 305 A1 betrifft eine Tretkurbelanordnung für ein zumindest teilweise muskelbetriebenes Fahrzeug, umfassend eine Tretkurbel mit einer Tretachse und eine koaxial um die Tretachse angeordnete Getriebevorrichtung mit einem axial benachbart angeordneten Generator, wobei die Getriebevorrichtung und der Generator in einem gemeinsamen Gehäuse angeordnet sind, wobei der Generator einen stationär am Gehäuse festgelegten Stator und einen auf einer drehbaren Rotorwelle innerhalb des Stators angeordneten Rotor aufweist, wobei ferner die Getriebevorrichtung als mehrstufiges Planetengetriebe oder als Wolfromgetriebe ausgebildet ist, und wobei die Tretkurbel über die Getriebevorrichtung mit dem Generator verbunden ist, um durch die Tretkurbel erzeugte mechanische Energie in elektrische Energie umzuwandeln.

DE 10 2016 207 000 A1 betrifft einen Elektrofahrrad-Antriebsstrang, der einen Motor mit Rotor und Stator, eine Kurbelwelle, die mit zwei Pedalbaugruppen verbunden ist, und einen Stufen-Planetenzahnradsatz umfasst. Dieser Zahnradsatz verbindet den Motor und die Kurbelwelle mit einem Kettenring, der über eine Kette das Hinterrad antreibt, und enthält ein Drehmomentmessgerät zur Überwachung der Kurbelwelle.

### Darstellung der Erfindung

Ein erster Aspekt betrifft einen Fahrradantrieb. Der Fahrradantrieb kann dazu ausgebildet sein, eine Muskelkraft an ein angetriebenes Laufrad des Fahrrads zu übertragen, beispielsweise beim Pedalieren. Der Fahrradantrieb kann dazu ausgebildet sein, in einem elektrisch antreibbaren Fahrrad, wie einem Pedelec, verbaut zu werden. Der Fahrradantrieb kann in einem Rahmen des Fahrrads verbaut werden, beispielsweise wenigstens teilweise in einem Unterrohr, einem Tretlagergehäuse und alternativ oder zusätzlich in einem Sitzrohr des Fahrrads. Es kann sich ein niedriger Schwerpunkt ergeben. Zudem kann so eine rotierende Masse des Fahrrads, beispielsweise im Vergleich zu einem Fahrradantrieb mit Nabenmotor, besonders klein sein.

Der Fahrradantrieb weist eine Elektromaschine auf. Die Elektromaschine weist eine Abtriebswelle auf. An der Abtriebswelle kann von der Elektromaschine eine motorische Antriebskraft bereitgestellt werden. Der Fahrradantrieb kann dazu ausgebildet sein, ein Antreiben durch Muskelkraft lediglich zu unterstützen und das Fahrrad nicht alleine anzutreiben. Die Abtriebswelle kann einen Rotor der Elektromaschine ausbilden oder mit diesem drehfest verbunden sein. Eine Elektromaschine kann beispielsweise eine Asynchronmaschine oder Synchronmaschine sein. Eine Elektromaschine kann dazu ausgebildet sein, elektrische Energie in mechanische Energie zu wandeln. Optional kann eine Elektromaschine auch zur Rekuperation ausgebildet sein.

Der Fahrradantrieb weist ein Planetengetriebe auf. Das Planetengetriebe weist einen Antrieb und einen Abtrieb auf. An dem Antrieb kann eine zu übersetzende Größe, wie ein Drehmoment, in das Planetengetriebe eingespeist werden. An dem Abtrieb kann die übersetzte Größe ausgegeben werden, um diese beispielsweise an ein Laufrad eines Fahrrads zu übertragen.

Der Fahrradantrieb weist eine Tretkurbelwelle auf. Der Fahrradantrieb ist für eine Drehmomentübertragung von der Tretkurbelwelle an ein Laufrad eines Fahrrads ausgebildet. Eine Drehmomentübertragung kann beispielsweise in allen bestimmungsgemäßen Zuständen des Fahrradantriebs möglich sein. Beispielsweise kann eine Drehmomentübertragung durch eine permanente drehfeste Verbindung oder eine mechanische Wirkverbindung ermöglicht werden. Eine Drehmomentübertragung kann beispielsweise nur in eine Richtung möglich sein, welche ein Antreiben des Fahrrads in Vorwärtsfahrtrichtung bedingt. Dafür kann beispielsweise im Drehmomentfluss ein Freilaufelement angeordnet sein.

An der Tretkurbelwelle kann an jedem axialen Ende eine Tretkurbel befestigt sein. Die Tretkurbelwelle kann sich beispielsweise quer komplett durch den Fahrradantrieb erstrecken. Der Fahrradantrieb kann beispielsweise dazu ausgebildet sein, eine Muskelkraft von der Tretkurbelwelle an den Antrieb oder den Abtrieb des Planetengetriebes zu übertragen. Der Fahrradantrieb kann Pedale aufweisen, welche jeweils mit einer Tretkurbel drehbar verbunden sind. Der Fahrradantrieb kann dazu ausgebildet sein, dass ein Fahrer des Fahrrads ein Drehmoment über die Pedale auf die Tretkurbelwelle aufbringen kann. Die Tretkurbelwelle kann mit einem Ritzel des Fahrrads verbunden sein. Die Tretkurbelwelle kann mit dem Abtrieb des Planetengetriebes zur Drehmomentübertragung an das Laufrad verbunden sein, beispielsweise permanent drehfest oder mittels eines Freilaufelements. Die Tretkurbelwelle kann auch unter Umgehung des Planetengetriebes oder zumindest jeweiliger Planetenradsätze des Planetengetriebes ein Drehmoment an das Laufrad übertragen. Die Tretkurbelwelle kann auch mit dem Abtrieb mechanisch wirkverbunden sein, beispielsweise permanent oder schaltbar mittels einer Stirnradstufe. Die Tretkurbelwelle kann sich durch das Planetengetriebe und die Elektromaschine hindurch erstrecken. Jeweilige drehende Massen des Fahrrads können so besonders gering sein. Die Tretkurbelwelle kann beispielsweise koaxial mit der Abtriebswelle der Elektromaschine und alternativ oder zusätzlich dem Planetengetriebe angeordnet sein.

Das Planetengetriebe weist einen ersten Planetenradsatz und einen zweiten Planetenradsatz auf. Der erste Planetenradsatz kann beispielsweise als Minus-Planetenradsatz ausgebildet sein. Der zweite Planetenradsatz kann beispielsweise als Minus-Planetenradsatz ausgebildet sein. Es kann sich so ein Fahrradantrieb mit besonders hohem Wirkungsgrad ergeben. Der erste Planetenradsatz weist ein erstes Hohlrad, einen ersten Planetenträger mit jeweiligen drehbar daran gelagerten ersten Planetenrädern und ein erstes Sonnenrad auf. Der erste Planetenradsatz kann frei von weiteren Drehelementen sein. Der zweite Planetenradsatz weist ein zweites Hohlrad, einen zweiten Planetenträger mit jeweiligen drehbar daran gelagerten ersten Planetenrädern und ein zweites Sonnenrad auf. Der zweite Planetenradsatz kann frei von weiteren Drehelementen sein.

Jeweilige Nummerierungen dienen hierbei lediglich der Zuordnung von Elementen zu einem Planetenradsatz. Das Sonnenrad, der Planetenträger und das Hohlrad eines Planetenradsatzes können die jeweiligen Drehelemente des entsprechenden Planetenradsatzes bilden. An einem jeweiligen Planetenträger können ein oder mehrere Planetenräder drehbar gelagert sein. Beispielsweise können an jedem Planetenträger drei Planetenräder drehbar gelagert sein. Jedes Planetenrad kann beispielsweise mit dem entsprechenden Sonnenrad und dem entsprechenden Hohlrad des Planetenradsatzes, zu welchem das Planetenrad gehört, kämmen. Die beiden Planetenradsätze können koaxial zueinander angeordnet sein. Die beiden Planetenradsätze können koaxial zu der Abtriebswelle der Elektromaschine angeordnet sein. Das Planetengetriebe kann frei von weiteren Planetenradsätzen sein. Das Planetengetriebe kann frei von weiteren als den hier beschriebenen Elementen sein. Der Fahrradantrieb kann dazu ausgebildet sein, ein Drehmoment von der Elektromaschine über das Planetengetriebe an den Abtrieb des Planetengetriebes und alternativ oder zusätzlich ein Laufrad zu übertragen.

Das erste Hohlrad ist festgesetzt. Das zweite Hohlrad ist festgesetzt. Ein festgesetztes Drehelement kann beispielsweise permanent drehfest mit einem stationären Bauteil verbunden sein. Ein stationäres Bauteil kann beispielsweise als Rahmenbauteil des Fahrrads oder als Gehäusebauteil der Elektromaschine oder des Planetengetriebes ausgebildet sein. Ein festgesetztes Drehelement kann durch die Rotation anderer Drehelemente des Planetenradsatzes nicht mehr in Rotation versetzt werden. Aufgrund der Festsetzung der jeweiligen Hohlräder kann eine axiale Position der beiden Planetenradsätze vorgegeben sein. Jeweilige andere Drehelemente der beiden Planetenradsätze können axial beweglich, beispielsweise mittels Gleitlager, oder durch eine simple axiale Anlage an einem Getriebegehäuse des Planetengetriebes gelagert sein. Die beiden Planetenradsätze können selbstzentrierend ausgebildet sein. Es kann sich eine einfache Konstruktion mit wenigen Lagerstellen ergeben.

Das erste Sonnenrad bildet den Antrieb des Planetengetriebes. Der Fahrradantrieb ist für eine Drehmomentübertragung von der Abtriebswelle der Elektromaschine an den Antrieb des Planetengetriebes ausgebildet. Die Übertragung kann beispielsweise durch eine permanente oder schaltbare mechanische Wirkverbindung zwischen der Abtriebswelle der Elektromaschine und dem Antrieb des Planetengetriebes bereitgestellt werden. Der Antrieb des Planetengetriebes und die Abtriebswelle der Elektromaschine können permanent drehfest miteinander verbunden sein. Der Antrieb des Planetengetriebes und die Abtriebswelle der Elektromaschine können einstückig ausgebildet sein.

Der zweite Planetenträger bildet den Abtrieb des Planetengetriebes. Der Fahrradantrieb ist für eine Drehmomentübertragung von dem Abtrieb des Planetengetriebes an das Laufrad des Fahrrads ausgebildet. Diese Übertragung kann durch eine permanente oder schaltbare mechanische Wirkverbindung zwischen dem Antrieb des Planetengetriebes und dem Laufrad bereitgestellt werden. Beispielsweise kann eine Getriebeabtriebswelle mit dem Abtrieb des Planetengetriebes permanent drehfest oder schaltbar verbunden sein. Die Getriebeabtriebswelle kann beispielsweise mittels einer Kette oder eines Riemens mit dem Laufrad verbunden sein. Die Getriebeabtriebswelle kann dafür beispielsweise ein Kettenblatt oder eine Riemenscheibe ausbilden oder damit drehfest verbunden sein. Der Abtrieb des Planetengetriebes und der zweite Planetenträger können permanent drehfest miteinander verbunden sein. Der Abtrieb des Planetengetriebes und der zweite Planetenträger können einstückig ausgebildet sein. Der Abtrieb des Planetengetriebes und der zweite Planetenträger können einstückig mit der Getriebeabtriebswelle ausgebildet sein.

Der Fahrradantrieb ist für eine Drehmomentübertragung von dem ersten Planetenträger an das zweite Sonnenrad ausgebildet. Beispielsweise können der erste Planetenträger und das zweite Sonnenrad permanent oder schaltbar drehfest miteinander verbunden bzw. verbindbar sein. Beispielsweise können der erste Planetenträger und das zweite Sonnenrad einstückig ausgebildet sein.

Die jeweiligen ersten Planetenräder sind als erste Stufenplaneten ausgebildet. Die jeweiligen zweiten Planetenräder sind als zweite Stufenplaneten ausgebildet. Ein Stufenplanet erlaubt einen Planetenradsatz in Minus-Konfiguration mit einer sehr hohen Übersetzung bei geringer radialer Ausdehnung bereitzustellen. Ein Stufenplanet kann wenigstens einen ersten und einen zweiten Verzahnungsbereich aufweisen. Die Wirkdurchmesser der beiden Verzahnungsbereiche können unterschiedlich sein. Jeder Verzahnungsbereich kann durch ein Stufenplanetenteil gebildet sein, welche drehfest miteinander verbunden sind. Ein Stufenplanet kann auch einstückig ausgebildet sein. Der erste Verzahnungsbereich kämmt beispielsweise mit Hohlrad des jeweiligen Planetenradsatzes. Der zweite Verzahnungsbereich kämmt beispielsweise mit dem Sonnenrad des jeweiligen Planetenradsatzes.

Durch das Vorsehen von Stufenplanetenrädern kann das Planetengetriebe eine sehr hohe Übersetzung zwischen Antrieb und Abtrieb bereitstellen. Beispielsweise kann bei üblichen Fahrradgeometrien und Rahmengestaltungen der erste Planetenradsatz eine Standübersetzung von -5,3 aufweisen. Beispielsweise kann bei üblichen Fahrradgeometrien und Rahmengestaltungen der zweite Planetenradsatz eine Standübersetzung von -4,3 aufweisen. Es ergibt sich eine Übersetzung für das Planetengetriebe von 33,4. Gleichzeitig kann ein Wirkungsgrad von mehr als 90%, beispielsweise mehr als 97%, erreicht werden. Der Fahrradantrieb kann insgesamt kompakt und effizient sein.

Sind zwei Elemente mechanisch wirkverbunden, so sind diese unmittelbar oder mittelbar derart miteinander gekoppelt, dass eine Bewegung des einen Elements eine Reaktion des anderen Elements bewirkt. Beispielsweise kann eine mechanische Wirkverbindung durch eine formschlüssige oder reibschlüssige Verbindung bereitgestellt werden. Beispielsweise kann die mechanische Wirkverbindung einem Kämmen von korrespondierenden Verzahnungen von zwei Elementen entsprechen. Zwischen den Elementen können weitere Elemente, beispielsweise eine oder mehrere Stirnradstufen, vorgesehen sein. Unter einer permanent drehfesten Verbindung zweier Elemente wird eine Verbindung verstanden, bei welcher die beiden Elemente zu allen bestimmungsgemäßen Zuständen des Getriebes im Wesentlichen starr miteinander gekoppelt sind. Hierunter fällt auch eine reibschlüssige Verbindung, bei welcher es zu einem gewollten oder ungewollten Schlupf kommen kann. Permanent drehfest verbundene Elemente können als drehfest miteinander verbundene Einzelkomponenten oder auch einstückig vorliegen. Eine Verbindung zweier Elemente über ein weiteres Element kann bedeuten, dass dieses weitere Element an einer mittelbaren Wirkverbindung der beiden Elemente beteiligt ist. Beispielsweise kann dieses Element im Kraftfluss zwischen diesen beiden Elementen angeordnet sein. Eine Verbindung zweier Elemente über zwei oder mehr Elemente kann bedeuten, dass diese weiteren Elemente alle an einer mittelbaren Wirkverbindung der beiden Elemente beteiligt sind. Eine schaltbare Verbindung kann in einem Zustand eine Drehmomentübertragung zwischen zwei Elementen ermöglichen, beispielsweise durch eine starre Kopplung, und in einem anderen Zustand diese Drehmomentübertragung im Wesentlichen unterbrechen. Dafür kann zwischen den zwei Elementen ein entsprechendes Schaltelement vorgesehen sein.

Das Planetengetriebe und auch der Fahrradantrieb können beispielsweise nur die hier beschriebenen Elemente aufweisen. Beispielsweise kann das Planetengetriebe und auch der Fahrradantrieb frei von weiteren Drehelementen und alternativ oder zusätzlich Schaltelementen sein.

In einer weiteren Ausführungsform des Fahrradantriebs kann es vorgesehen sein, dass die jeweiligen ersten Stufenplanetenräder einen ersten Verzahnungsbereich, welcher mit dem ersten Hohlrad kämmt, und einen zweiten Verzahnungsbereich, welcher mit dem ersten Sonnenrad kämmt, aufweisen. Die jeweiligen zweiten Stufenplanetenräder können alternativ oder zusätzlich einen ersten Verzahnungsbereich, welcher mit dem zweiten Hohlrad kämmt, und einen zweiten Verzahnungsbereich, welcher mit dem zweiten Sonnenrad kämmt, aufweisen. Die jeweiligen zweiten Verzahnungsbereiche können einen größeren Wirkdurchmesser als die jeweiligen ersten Verzahnungsbereiche aufweisen. Es ergibt sich eine große Übersetzung für jeden Planetenradsatz. Zudem ist so eine sehr kompakte Anordnung möglich. Ein Wirkdurchmesser kann einen Durchmesser beschreiben, an welchem zwei miteinander kämmende Zahnräder einen Kontakt aufweisen. Der Wirkdurchmesser kann beispielsweise einem Wälzkreisdurchmesser entsprechen. Die Übersetzung kann sich aufgrund der Wirkdurchmesser bestimmen.

In einer weiteren Ausführungsform des Fahrradantriebs kann es vorgesehen sein, dass die jeweiligen ersten Stufenplanetenräder symmetrisch ausgebildet sind. Die jeweiligen zweiten Stufenplanetenräder können alternativ oder zusätzlich symmetrisch ausgebildet sein. Dadurch wird eine Verkippung der Stufenplanetenräder vermieden. Dadurch können ein Wirkungsgrad und eine Lagerlebensdauer hoch sein. Die Stufenplanetenräder können beispielsweise mittels jeweiliger Lager drehbar an dem jeweiligen Planetenträger gelagert sein.

Beispielsweise kann ein symmetrisches Stufenplanetenrad zwei zweite Verzahnungsteilbereiche aufweisen, welche zusammen den zweiten Verzahnungsbereich bilden. Einer der beiden zweiten Verzahnungsteilbereiche kann axial auf einer Seite zu dem ersten Verzahnungsbereich angeordnet sein und ein anderer der beiden zweiten Verzahnungsteilbereiche kann axial auf einer dazu gegenüberliegenden Seite zu dem ersten Verzahnungsbereich angeordnet sein. Der erste Verzahnungsbereich kann also axial zwischen den beiden zweiten Verzahnungsteilbereichen angeordnet sein. Eine Symmetrieebene eines symmetrischen Stufenplanetenrads kann sich beispielsweise durch den ersten Verzahnungsbereich erstrecken. Der erste Verzahnungsbereich kann axial mittig angeordnet sein.

So können jeweilige Kämmungen mit anderen Drehelementen konstruktiv einfach ermöglicht werden. Zudem ist so Bauraum axial zwischen den Stufenplanetenrädern vorhanden, in welchem andere Bauteile, wie beispielsweise Schaltelemente, angeordnet werden können. Zudem ist eine Fertigung so besonders einfach möglich, wenn der zweite Verzahnungsbereich einen größeren Wirkdurchmesser aufweist. Beispielsweise kann der erste Verzahnungsbereich durch ein Zahnrad mit durchgehender Verzahnung gebildet werden. Dieses Zahnrad kann in ein zweites Zahnrad, welches radial außenseitig den zweiten Verzahnungsbereich ausbildet, eingesteckt werden. Das zweite Zahnrad kann radial innenseitig eine zu dem ersten Verzahnungsbereich korrespondierende Verzahnung ausbilden, wodurch eine drehfeste Verbindung zwischen den beiden Zahnrädern beim Einstecken hergestellt wird. Jeweilige Teilbereiche des eingesteckten Zahnrads, welche axial herausstehen, bilden dann die beiden zweiten Verzahnungsteilbereiche. Ein symmetrisches Stufenplanetenrad mit mittigem Verzahnungsbereich mit größerem Wirkdurchmesser kann auch auf eine andere Weise einfach gefertigt werden, beispielsweise einstückig durch spanende Fertigung aus einem einzelnen Rohteil.

In einer weiteren Ausführungsform des Fahrradantriebs kann es vorgesehen sein, dass das erste Sonnenrad mit der Abtriebswelle der Elektromaschine permanent drehfest verbunden ist. Beispielsweise können das erste Sonnenrad und die Abtriebswelle der Elektromaschine einstückig ausgebildet sein oder miteinander verschraubt sein. Es ergibt sich ein robuster Fahrradantrieb. Alternativ kann das erste Sonnenrad mit der Abtriebswelle mittels eines zweiten Freilaufelements drehfest verbindbar sein. Das zweite Freilaufelement wird noch im Folgenden weiter beschrieben, ebenso wie ein genauso optionales erstes Freilaufelement. Durch das Vorsehen des zweiten Freilaufelements kann die Elektromaschine selbsttätig abgekoppelt werden, damit bei abgeschalteter Elektromaschine deren Rotor nicht mitgeschleppt werden muss. Alternativ oder zusätzlich kann auch ein Schaltelement, wie eine formschlüssige oder reibschlüssige Kupplung vorgesehen sein. Dadurch kann im geöffneten Zustand ein Mitschleppen vermieden werden und im geschlossenen Zustand eine Rekuperation ermöglicht werden.

In einer weiteren Ausführungsform des Fahrradantriebs kann es vorgesehen sein, dass die Tretkurbelwelle mittels eines ersten Freilaufelements mit dem Abtrieb des Planetengetriebes drehfest verbindbar ist. Durch das Freilaufelement kann die Tretkurbelwelle von dem restlichen Fahrradantrieb entkoppelt werden. Dadurch kann eine Übertragung eines Antriebsmoments von der Elektromaschine auf die Tretkurbelwelle vermieden werden, wenn ein Fahrradfahrer abrupt aufhört zu pedalieren. Das erste Freilaufelement verbindet die Tretkurbelwelle in eine relative Drehrichtung mit einem Element des Fahrradantriebs, wie beispielsweise der Getriebeabtriebswelle. Das erste Freilaufelement trennt die Tretkurbelwelle in eine dazu entgegensetzte relative Drehrichtung von diesem Element des Fahrradantriebs.

Ein Schaltelement kann beispielsweise als formschlüssiges oder reibschlüssiges Schaltelement ausgebildet sein. Ein Schaltelement kann durch dessen Betätigung zwei Elemente drehfest miteinander verbinden. Unbetätigt kann dagegen eine Drehmomentübertragung zwischen zwei Elementen über das Schaltelement unterbrochen sein. Ein Schaltelement kann als selbsttätig schaltendes Schaltelement oder aktiv schaltbares Schaltelement ausgebildet sein. Ein aktiv schaltbares Schaltelement kann beispielsweise von einem Benutzer und alternativ oder zusätzlich durch einen Aktuator verstellt werden, um zwischen dessen jeweiligen Schaltzuständen zu wechseln. Für die Betätigung jeweiliger Schaltelemente kann der Fahrradantrieb einen Schalthebel aufweisen. Ein Freilaufelement als ein selbsttätig schaltendes Schaltelement sperrt dagegen in Abhängigkeit von einer relativen Drehrichtung, um zwei Elemente miteinander zu verbinden. Das Freilaufelement stellt also eine besondere Art eines Schaltelements dar.

In einer weiteren Ausführungsform des Fahrradantriebs kann es vorgesehen sein, dass das erste Freilaufelement axial zwischen dem ersten Sonnenrad und dem zweiten Sonnenrad angeordnet ist. Dadurch ergibt sich ein besonders kompakter Fahrradantrieb. Beispielsweise kann das Freilaufelement in einem Bauraum angeordnet sein, der aufgrund einer stufigen Gestaltung der Stufenplanetenräder nicht durch die jeweiligen Planetenräder belegt ist. Beispielsweise kann das erste Freilaufelement axial zwischen den Verzahnungsbereichen der jeweiligen Stufenplanetenräder angeordnet sein, welche jeweils den größeren Wirkdurchmesser aufweisen, also beispielsweise zwischen den jeweiligen zweiten Verzahnungsbereichen. Beispielsweise kann das erste Freilaufelement axial in wenigstens teilweiser Überlappung mit einer axialen Erstreckung eines Verzahnungsbereich oder eines Verzahnungsteilbereichs eines oder beider Stufenplanetenräder angeordnet sein, also beispielsweise den Verzahnungsteilbereichen des ersten Verzahnungsbereichs jedes Stufenplanetenrads, welche einander zugewandt sind. Dadurch kann das Planetengetriebe axial besonders kurz sein. Beispielsweise kann das erste Freilaufelement radial innerhalb der Verzahnungsbereiche der jeweiligen Stufenplanetenräder angeordnet sein, welche jeweils den kleineren Wirkdurchmesser aufweisen, also beispielsweise radial innen zu den jeweiligen ersten Verzahnungsbereichen. Beispielsweise kann das erste Freilaufelement radial in wenigstens teilweiser Überlappung mit einer radialen Erstreckung der Verzahnungsbereiche der jeweiligen Stufenplanetenräder angeordnet sein, welche jeweils den größeren Wirkdurchmesser aufweisen, also beispielsweise den jeweiligen zweiten Verzahnungsbereichen. Dadurch kann das Planetengetriebe radial besonders kompakt sein.

In einer weiteren Ausführungsform des Fahrradantriebs kann es vorgesehen sein, dass der Fahrradantrieb eine Zwischenwelle aufweist. Der Fahrradantrieb kann für eine Drehmomentübertragung von der Tretkurbelwelle an ein Laufrad eines Fahrrads über die Zwischenwelle ausgebildet sein. Die Zwischenwelle kann eine Drehmomentsensierung eines an der Tretkurbelwelle anliegenden Drehmoments mittels eines einzigen Sensors erlauben, beispielsweise eines an der Zwischenwelle angeordneten Dehnungsmessstreifens. Die Zwischenwelle kann koaxial zu der Tretkurbelwelle angeordnet sein. Die Tretkurbelwelle kann sich durch die Zwischenwelle durch erstrecken. Die Zwischenwelle kann mit der Getriebeabtriebswelle permanent drehfest oder schaltbar verbunden sein. Die Zwischenwelle kann sich radial innen zu dem ersten Sonnenrad erstrecken. Die Zwischenwelle kann durch einen Innenring des ersten Freilaufelements gebildet sein oder damit drehfest verbunden sein. Der Fahrradantrieb kann so wenige Teile aufweisen. Der Innenring des ersten Freilaufelements kann jeweilige Freilaufklinken aufweisen.

In einer weiteren Ausführungsform des Fahrradantriebs kann es vorgesehen sein, dass die Abtriebswelle der Elektromaschine mit dem Abtrieb des Planetengetriebes mittels eines zweiten Freilaufelements drehfest verbindbar ist. Dadurch kann ein Mitschleppen des Rotors der Elektromaschine bei abgeschalteter Elektromaschine vermieden werden. Der Fahrradantrieb ist so besonders effizient, wenn dieser nur mit Muskelkraft betrieben wird. Alternativ oder zusätzlich kann ein betätigbares Schaltelement vorgesehen werden, um auch eine Rekuperation zu ermöglichen.

In einer weiteren Ausführungsform des Fahrradantriebs kann es vorgesehen sein, dass der zweite Planetenträger mit dem Abtrieb des Planetengetriebes mittels des zweiten Freilaufelements drehfest verbindbar ist. Dadurch kann auch ein Mitschleppen des Planetengetriebes bei abgeschalteter Elektromaschine vermieden werden. Der Fahrradantrieb ist so besonders effizient, wenn dieser nur mit Muskelkraft betrieben wird. Alternativ kann auch beispielsweise der erste Planetenträger mit dem zweiten Sonnenrad mittels des zweiten Freilaufelements drehfest verbindbar sein. Dann wird ein Mitschleppen des ersten Planetenradsatzes und der Elektromaschine vermieden. Wie bereits zuvor geschildert, kann auch beispielsweise die Abtriebswelle der Elektromaschine und das erste Sonnenrad mittels des zweiten Freilaufelements drehfest verbindbar sein. Sofern alternativ oder zusätzlich ein betätigbares Schaltelement vorgesehen wird, kann dieses an den zuvor beschriebenen Positionen im Drehmomentfluss angeordnet sein.

In einer weiteren Ausführungsform des Fahrradantriebs kann es vorgesehen sein, dass der erste Planetenträger mit dem zweiten Sonnenrad permanent drehfest verbunden ist. Es ergibt sich ein robustes Planetengetriebe. Beispielsweise können der erste Planetenträger und das zweite Sonnenrad miteinander verschraubt sein oder einstückig ausgebildet sein.

In einer weiteren Ausführungsform des Fahrradantriebs kann es vorgesehen sein, dass das Planetengetriebe ein Getriebegehäuse aufweist, welches axial abtriebsseitig eine Anlage für den zweiten Planetenradsatz ausbildet. Dadurch kann eine einfache Lagerung für den zweiten Planetenradsatz gebildet werden. So kann das Planetengetriebe axial gelagert werden. Zudem kann so ein ungewolltes Zerlegen des Planetengetriebes verhindert werden. Der erste Planetenträger und das zweite Sonnenrad können axial beweglich drehfest miteinander verbunden sein. Die beiden Planetenradsätze können so einfach selbstzentrierend verbaut werden. An dem Getriebegehäuse können die beiden Hohlräder festgesetzt sein.

In einer weiteren Ausführungsform des Fahrradantriebs kann es vorgesehen sein, dass die Elektromaschine als Außenläufer ausgebildet ist. Ein Rotor der Elektromaschine kann radial außen zu einem Stator der Elektromaschine angeordnet sein. Es kann sich eine einfache Lagerung und zudem eine einfache Verbindung der Abtriebswelle der Elektromaschine mit dem ersten Sonnenrad ergeben. Alternativ kann die Elektromaschine als Innenläufer ausgebildet sein.

Ein zweiter Aspekt betrifft ein Fahrrad mit einem Fahrradantrieb gemäß dem ersten Aspekt. Das Fahrrad weist ein Laufrad auf. Ein Laufrad kann beispielsweise eine Felge und eine Nabe aufweisen. Das Laufrad ist mit dem Fahrradantrieb antreibbar. Der Abtrieb des Planetengetriebes kann mit dem Laufrad des Fahrrads mechanisch wirkverbindbar sein oder auch dauerhaft mechanisch wirkverbunden sein. Beispielsweise kann der Abtrieb des Planetengetriebes und alternativ oder zusätzlich die Tretkurbelwelle über eine Kette oder einen Riemen mit dem Laufrad mechanisch wirkverbindbar sein. In dem Laufrad kann beispielsweise ein weiteres Freilaufelement vorgesehen sein, damit das Fahrrad ohne Bewegen des Fahrradantriebs rollen kann. Das Fahrrad kann einen Fahrradrahmen aufweisen, an welchem der Fahrradantrieb befestigt ist. Jeweilige Vorteile und weitere Merkmale sind der Beschreibung des ersten Aspekts zu entnehmen, wobei Ausgestaltungen des ersten Aspekts auch Ausgestaltungen des zweiten Aspekts und umgekehrt bilden.

### Kurze Beschreibung der Figur

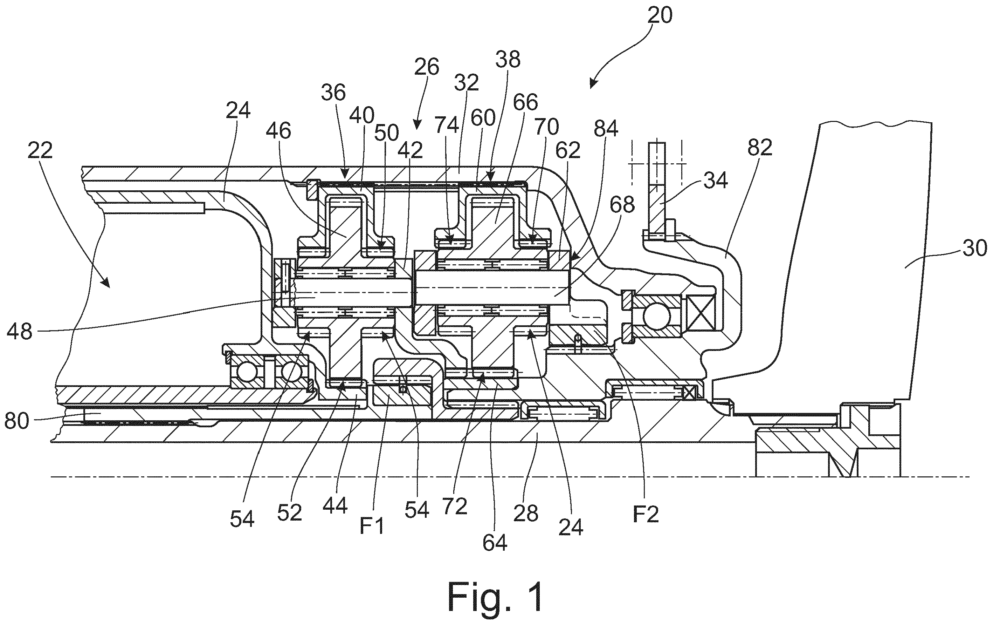

- Fig. 1: veranschaulicht schematisch in einer Schnittansicht einen Fahrradantrieb gemäß einer Ausführungsform.

### Detaillierte Beschreibung von Ausführungsformen

Figur 1 zeigt schematisch einen Fahrradantrieb 20 in einer Schnittansicht. Der Fahrradantrieb 20 weist eine Elektromaschine 22 mit einer Abtriebswelle 24 auf. Die Elektromaschine 22 ist als Außenläufer ausgebildet und die Abtriebswelle 24 entsprechend bei der Elektromaschine 22 radial außen angeordnet. Zudem weist der Fahrradantrieb 20 ein Planetengetriebe 26 und eine Tretkurbelwelle 28 auf. Das Planetengetriebe 26 und die Elektromaschine 22 sind gemeinsam in einem stationären Bauteil aufgenommen, welches als Getriebegehäuse 32 ausgebildet ist. Die Tretkurbelwelle 28 erstreckt sich koaxial zu der Abtriebswelle 24 und dem Planetengetriebe 26 durch die Elektromaschine 22 und das Planetengetriebe 26 quer hindurch. Die Tretkurbelwelle 28 ist hohl ausgebildet. An deren axialen Enden sind an der Tretkurbelwelle 28 Tretkurbeln 30 drehfest befestigt, an welchen Pedale drehbar gelagert sind. In Fig. 1 ist nur die rechte Tretkurbel 30 teilweise dargestellt. Der Fahrradantrieb 20 ist dazu ausgebildet, ein mit Muskelkraft an der Tretkurbelwelle 28 erzeugtes Drehmoment an ein Laufrad des Fahrrads zu übertragen.

Das Planetengetriebe 26 weist einen Antrieb und einen Abtrieb auf. An dem Antrieb wird im Betrieb ein antreibendes Drehmoment von der Abtriebswelle 24 der Elektromaschine 22 in das Planetengetriebe eingespeist. An dem Abtrieb wird das Drehmoment übersetzt ausgegeben. Dieses Drehmoment wird an das Laufrad des Fahrrads übertragen. In dem hier gezeigten Beispiel ist dafür ein Ritzel 34 drehfest mit dem Abtrieb verbunden. Die Drehmomentübertragung erfolgt somit mittels eines Kettentriebs.

Das Planetengetriebe 26 weist einen ersten Planetenradsatz 36 und einen zweiten Planetenradsatz 38 auf. Der erste Planetenradsatz 36 weist ein erstes Hohlrad 40, einen ersten Planetenträger 42 und ein erstes Sonnenrad 44 auf. Das erste Hohlrad 40 ist permanent drehfest mit dem Getriebegehäuse 32 verbunden und so festgesetzt. Das erste Sonnenrad 44 ist permanent drehfest mit der Abtriebswelle 24 der Elektromaschine 22 verbunden und bildet so den Antrieb des Planetengetriebes 26.

An dem ersten Planetenträger 42 sind mehrere erste Planetenräder 46 mittels jeweils eines Bolzens 48 drehbar gelagert. Die ersten Planetenräder 46 sind jeweils als symmetrische Stufenplanetenräder ausgebildet. Eine erste Stufe der ersten Planetenräder 46 wird durch einen ersten Verzahnungsbereich 50 gebildet, welcher mit dem ersten Hohlrad 40 kämmt. Eine zweite Stufe der ersten Planetenräder 46 wird durch einen zweiten Verzahnungsbereich 52 gebildet, welcher mit dem ersten Sonnenrad 44 kämmt. Der zweite Verzahnungsbereich 52 ist axial mittig in dem ersten Planetenrad 46 angeordnet und weist einen größeren Wirkdurchmesser als der erste Verzahnungsbereich 50 auf. Der erste Verzahnungsbereich 50 weist zwei erste Verzahnungsteilbereiche 54 auf, welche axial auf gegenüberliegenden Seiten benachbart zu dem zweiten Verzahnungsbereich 52 angeordnet sind. Das erste Hohlrad 40 erstreckt sich radial teilweise entlang dem zweiten Verzahnungsbereich 52 und umgreift so teilweise den zweiten Verzahnungsbereich 52. Durch die Nutzung von Stufenplanetenrädern bei dem als Minus-Planetenradsatz ausgebildeten ersten Planetenradsatz 36 weist dieser eine hohe Übersetzung und einen hohen Wirkungsgrad auf. Durch die symmetrische Bauweise der ersten Stufenplanetenräder 46 wird eine Verkippung vermieden, wodurch Wirkungsgrad und Lebensdauer sehr hoch sind.

Der zweite Planetenradsatz 38 ist ähnlich zu dem ersten Planetenradsatz 36 gestaltet. Der zweite Planetenradsatz 38 weist ein zweites Hohlrad 60, einen zweiten Planetenträger 62 und ein zweites Sonnenrad 64 auf. Das zweite Hohlrad 60 ist permanent drehfest mit dem Getriebegehäuse 32 verbunden und so festgesetzt. Das zweite Sonnenrad 64 ist permanent drehfest mittels einer Verzahnung mit dem ersten Planetenträger 42 verbunden.

An dem zweiten Planetenträger 62 sind mehrere zweite Planetenräder 66 mittels jeweils eines Bolzens 68 drehbar gelagert. Die zweiten Planetenräder 66 sind jeweils als symmetrische Stufenplanetenräder ausgebildet. Eine erste Stufe der zweiten Planetenräder 66 wird durch einen ersten Verzahnungsbereich 70 gebildet, welcher mit dem zweiten Hohlrad 60 kämmt. Eine zweite Stufe der zweiten Planetenräder 66 wird durch einen zweiten Verzahnungsbereich 72 gebildet, welcher mit dem zweiten Sonnenrad 64 kämmt. Dabei wird die Verzahnung des zweiten Sonnenrads 64 genutzt, welche auch die drehfeste Verbindung des zweiten Sonnenrads 64 mit dem ersten Planetenträger 42 bereitstellt. Das Planetengetriebe 26 kann so besonders kostengünstig gefertigt werden. Der zweite Verzahnungsbereich 72 ist axial mittig in dem zweiten Planetenrad 66 angeordnet und weist einen größeren Wirkdurchmesser als der erste Verzahnungsbereich 70 auf. Der erste Verzahnungsbereich 70 weist zwei erste Verzahnungsteilbereiche 74 auf, welche axial auf gegenüberliegenden Seiten benachbart zu dem zweiten Verzahnungsbereich 72 angeordnet sind. Das zweite Hohlrad 64 erstreckt sich radial teilweise entlang dem zweiten Verzahnungsbereich 72 und umgreift so teilweise den zweiten Verzahnungsbereich 72. Durch die Nutzung von Stufenplanetenrädern bei dem als Minus-Planetenradsatz ausgebildeten zweiten Planetenradsatz 38 weist dieser eine hohe Übersetzung und einen hohen Wirkungsgrad auf. Durch die symmetrische Bauweise der zweiten Stufenplanetenräder 66 wird eine Verkippung vermieden, wodurch Wirkungsgrad und Lebensdauer sehr hoch sind.

Die Tretkurbelwelle 28 ist mit einer Zwischenwelle 80 permanent drehfest verbunden. Die Zwischenwelle 80 bildet einen Innenring eines ersten Freilaufelements F1, an welchem in dem gezeigten Beispiel auch jeweilige Freilaufklinken des ersten Freilaufelements F1 angeordnet sind. Mittels des ersten Freilaufelements F1 ist die Zwischenwelle 80 und damit auch die Tretkurbelwelle 28 mit einer Getriebeabtriebswelle 82 drehfest verbindbar. An der Getriebeabtriebswelle 82 ist das Ritzel 34 drehfest befestigt. Der Fahrradantrieb 20 ist dazu ausgebildet, von der Tretkurbelwelle 28 über die Zwischenwelle 80, das erste Freilaufelement F1, die Getriebeabtriebswelle 82 und das Ritzel 34 ein mit Muskelkraft erzeugtes antreibendes Drehmoment an das Laufrad des Fahrrads zu übertragen. Die Zwischenwelle 80 erlaubt eine Drehmomentsensierung mit nur einem Drehmomentsensor.

Der zweite Planetenträger 62 ist mittels eines zweiten Freilaufelements F2 mit der Getriebeabtriebswelle 82 und damit dem Ritzel 34 drehfest verbindbar. Der zweite Planetenträger 62 bildet somit den Abtrieb des Planetengetriebes 26. Durch das zweite Freilaufelement F2 kann das Planetengetriebe 26 und die Elektromaschine 22 abgekoppelt werden, damit diese beim Pedalieren mit abgeschalteter Elektromaschine 22 nicht mitgeschleppt werden müssen. Das erste Freilaufelement F1 kann die Tretkurbelwelle 28 von der Getriebeabtriebswelle 82 entkoppeln, sodass bei einer abrupten Beendigung einer Pedalierbewegung die Elektromaschine 22 kein Vortriebsmoment auf die Tretkurbelwelle 28 überträgt.

Das erste Freilaufelement F1 ist bauraumneutral zwischen dem ersten Sonnenrad 44 und dem zweiten Sonnenrad 64 angeordnet. Dieser Bauraum ist aufgrund der gestuften Ausgestaltung der ersten und zweiten Planetenräder 46, 66 mit dem jeweiligen axial mittig angeordneten zweiten Verzahnungsbereich 52 bzw. 72 vorhanden. Das erste Freilaufelement F1 ist axial zwischen den jeweiligen zweiten Verzahnungsbereichen 52 und 72 angeordnet. Das erste Freilaufelement F1 ist axial in teilweiser Überlappung mit den jeweiligen ersten Verzahnungsbereichen 50, 70 angeordnet. Konkret ist das erste Freilaufelement F1 in axial teilweiser Überlappung mit den beiden ersten Verzahnungsteilbereichen 54, 74 der ersten und zweiten Planetenräder 46, 66 angeordnet, welche einander zugewandt sind.

Das Getriebegehäuse 32 bildet eine axiale Anlagefläche 84 für das Planetengetriebe 26 abtriebsseitig aus. An dieser Anlagefläche 84 kann der zweite Planetenträger 62 in dem gezeigten Beispiel anliegen.

### Bezugszeichen

- 20: Fahrradantrieb
- 22: Elektromaschine
- 24: Abtriebswelle
- 26: Planetengetriebe
- 28: Tretkurbelwelle
- 30: Tretkurbeln
- 32: Getriebegehäuse
- 34: Ritzel
- 36: erster Planetenradsatz
- 38: zweiter Planetenradsatz
- 40: erstes Hohlrad
- 42: erster Planetenträger
- 44: erstes Sonnenrad
- 46: erste Planetenräder
- 48: Bolzen
- 50: erster Verzahnungsbereich
- 52: zweiter Verzahnungsbereich
- 54: erste Verzahnungsteilbereiche
- 60: zweites Hohlrad
- 62: zweiter Planetenträger
- 64: zweites Sonnenrad
- 66: zweite Planetenräder
- 68: Bolzen
- 70: erster Verzahnungsbereich
- 72: zweiter Verzahnungsbereich
- 74: erste Verzahnungsteilbereiche
- 80: Zwischenwelle
- 82: Getriebeabtriebswelle
- 84: Anlagefläche
- F1: erstes Freilaufelement
- F2: zweites Freilaufelement

## Patentansprüche

1. Fahrradantrieb (20) mit einer Elektromaschine (22), welche eine Abtriebswelle (24) aufweist, mit einer Tretkurbelwelle (28) und mit einem Planetengetriebe (26), welches einen Antrieb, einen Abtrieb, einen erste Planetenradsatz (36) und einen zweiten Planetenradsatz (38) aufweist, wobei der Fahrradantrieb (20) für eine Drehmomentübertragung von der Tretkurbelwelle (28) an ein Laufrad eines Fahrrads ausgebildet ist, wobei der erste Planetenradsatz (36) ein erstes Hohlrad (40), einen ersten Planetenträger (42) mit jeweiligen drehbar daran gelagerten ersten Planetenrädern (46) und ein erstes Sonnenrad (44) aufweist, wobei der zweite Planetenradsatz (38) ein zweites Hohlrad (60), einen zweiten Planetenträger (62) mit jeweiligen drehbar daran gelagerten ersten Planetenrädern (66) und ein zweites Sonnenrad (64) aufweist, wobei das erste Hohlrad (40) festgesetzt ist, wobei das zweite Hohlrad (60) festgesetzt ist, wobei das erste Sonnenrad (44) den Antrieb des Planetengetriebes (26) bildet, wobei der Fahrradantrieb (20) für eine Drehmomentübertragung von der Abtriebswelle (24) der Elektromaschine (22) an den Antrieb des Planetengetriebes (26) ausgebildet ist, wobei der zweite Planetenträger (62) den Abtrieb des Planetengetriebes (26) bildet, wobei der Fahrradantrieb (20) für eine Drehmomentübertragung von dem Abtrieb des Planetengetriebes (26) an das Laufrad des Fahrrads ausgebildet ist, wobei der Fahrradantrieb (20) für eine Drehmomentübertragung von dem ersten Planetenträger (42) an das zweite Sonnenrad (64) ausgebildet ist, wobei die jeweiligen ersten Planetenräder (46) als erste Stufenplaneten ausgebildet sind und wobei die jeweiligen zweiten Planetenräder (66) als zweite Stufenplaneten ausgebildet sind.

2. Fahrradantrieb (20) nach Anspruch 1, **dadurch gekennzeichnet, dass** die jeweiligen ersten Stufenplanetenräder (46) einen ersten Verzahnungsbereich (50), welcher mit dem ersten Hohlrad (40) kämmt, und einen zweiten Verzahnungsbereich (52), welcher mit dem ersten Sonnenrad (44) kämmt, aufweisen und die jeweiligen zweiten Stufenplanetenräder (66) einen ersten Verzahnungsbereich (70), welcher mit dem zweiten Hohlrad (60) kämmt, und einen zweiten Verzahnungsbereich (72), welcher mit dem zweiten Sonnenrad (64) kämmt, aufweisen, wobei die jeweiligen zweiten Verzahnungsbereiche (52, 72) einen größeren Wirkdurchmesser als die jeweiligen ersten Verzahnungsbereiche (50, 70) aufweisen.

3. Fahrradantrieb (20) nach Anspruch 1 oder 2, **dadurch gekennzeichnet, dass** die jeweiligen ersten Stufenplanetenräder (46) symmetrisch ausgebildet sind.

4. Fahrradantrieb (20) nach einem der vorhergehenden Ansprüche, **dadurch gekennzeichnet, dass** die jeweiligen zweiten Stufenplanetenräder (66) symmetrisch ausgebildet sind.

5. Fahrradantrieb (20) nach einem der vorgehenden Ansprüche, **dadurch gekennzeichnet, dass** das erste Sonnenrad (44) mit der Abtriebswelle (24) der Elektromaschine (22) permanent drehfest verbunden ist.

6. Fahrradantrieb (20) nach einem der vorgehenden Ansprüche, **dadurch gekennzeichnet, dass** die Tretkurbelwelle (28) mittels eines ersten Freilaufelements (F1) mit dem Abtrieb des Planetengetriebes (26) drehfest verbindbar ist.

7. Fahrradantrieb (20) nach Anspruch 6, **dadurch gekennzeichnet, dass** das erste Freilaufelement (F1) axial zwischen dem ersten Sonnenrad (44) und dem zweiten Sonnenrad (64) angeordnet ist.

8. Fahrradantrieb (20) nach einem der vorgehenden Ansprüche, **dadurch gekennzeichnet, dass** der Fahrradantrieb (20) eine Zwischenwelle (80) aufweist, wobei der Fahrradantrieb (20) für eine Drehmomentübertragung von der Tretkurbelwelle (28) an ein Laufrad eines Fahrrads über die Zwischenwelle (80) ausgebildet ist.

9. Fahrradantrieb (20) nach einem der vorgehenden Ansprüche, **dadurch gekennzeichnet, dass** die Abtriebswelle (24) der Elektromaschine (22) mit dem Abtrieb des Planetengetriebes (26) mittels eines zweiten Freilaufelements (F2) drehfest verbindbar ist.

10. Fahrradantrieb (20) nach Anspruch 9, **dadurch gekennzeichnet, dass** der zweite Planetenträger (62) mit dem Abtrieb des Planetengetriebes (26) mittels des zweiten Freilaufelements (F2) drehfest verbindbar ist.

11. Fahrradantrieb (20) nach einem der vorgehenden Ansprüche, **dadurch gekennzeichnet, dass** der erste Planetenträger (42) mit dem zweiten Sonnenrad (64) permanent drehfest verbunden ist.

12. Fahrradantrieb (20) nach einem der vorgehenden Ansprüche, **dadurch gekennzeichnet, dass** das Planetengetriebe (26) ein Getriebegehäuse (32) aufweist, welches axial abtriebsseitig eine Anlage (84) für den zweiten Planetenradsatz (38) ausbildet.

13. Fahrradantrieb (20) nach einem der vorgehenden Ansprüche, **dadurch gekennzeichnet, dass** die Elektromaschine (22) als Außenläufer ausgebildet ist.

14. Fahrrad mit einem Laufrad und einem Fahrradantrieb (20) nach einem der vorhergehenden Ansprüche, wobei das Laufrad mit dem Fahrradantrieb (20) antreibbar ist.

## Claims

1. Bicycle drive (20) having an electric machine (22), which has an output shaft (24), having a pedal crankshaft (28) and having a planetary transmission (26), which has an input, an output, a first planetary gearset (36) and a second planetary gearset (38), wherein the bicycle drive (20) is designed for torque transmission from the pedal crankshaft (28) to a wheel of a bicycle, wherein the first planetary gearset (36) has a first ring gear (40), a first planet carrier (42) with respective first planet gears (46) rotatably mounted thereon and a first sun gear (44), wherein the second planetary gearset (38) has a second ring gear (60), a second planet carrier (62) with respective first planet gears (66) rotatably mounted thereon and a second sun gear (64), wherein the first ring gear (40) is fixed, wherein the second ring gear (60) is fixed, wherein the first sun gear (44) forms the input of the planetary transmission (26), wherein the bicycle drive (20) is designed for torque transmission from the output shaft (24) of the electric machine (22) to the output of the planetary transmission (26), wherein the second planet carrier (62) forms the output of the planetary transmission (26), wherein the bicycle drive (20) is designed for torque transmission from the output of the planetary transmission (26) to the wheel of the bicycle, wherein the bicycle drive (20) is designed for torque transmission from the first planet carrier (42) to the second sun gear (64), wherein the respective first planet gears (46) are designed as first stepped planet gears, and wherein the respective second planet gears (66) are designed as second stepped planet gears.

2. Bicycle drive (20) according to Claim 1, **characterized in that** the respective first stepped planet gears (46) have a first toothing region (50), which meshes with the first ring gear (40), and a second toothing region (52), which meshes with the first sun gear (44), and the respective second stepped planet gears (66) have a first toothing region (70), which meshes with the second ring gear (60), and a second toothing region (72), which meshes with the second sun gear (64), wherein the respective second toothing regions (52, 72) have a larger effective diameter than the respective first toothing regions (50, 70).

3. Bicycle drive (20) according to Claim 1 or 2, **characterized in that** the respective first stepped planet gears (46) are designed to be symmetrical.

4. Bicycle drive (20) according to one of the preceding claims, **characterized in that** the respective second stepped planet gears (66) are designed to be symmetrical.

5. Bicycle drive (20) according to one of the preceding claims, **characterized in that** the first sun gear (44) is permanently connected for conjoint rotation with the output shaft (24) of the electric machine (22).

6. Bicycle drive (20) according to one of the preceding claims, **characterized in that** the pedal crankshaft (28) can be connected for conjoint rotation with the output of the planetary transmission (26) by means of a first freewheel element (F1).

7. Bicycle drive (20) according to Claim 6, **characterized in that** the first freewheel element (F1) is arranged axially between the first sun gear (44) and the second sun gear (64).

8. Bicycle drive (20) according to one of the preceding claims, **characterized in that** the bicycle drive (20) has an intermediate shaft (80), wherein the bicycle drive (20) is designed for torque transmission from the pedal crankshaft (28) to a wheel of a bicycle by means of the intermediate shaft (80).

9. Bicycle drive (20) according to one of the preceding claims, **characterized in that** the output shaft (24) of the electric machine (22) can be connected for conjoint rotation with the output of the planetary transmission (26) by means of a second freewheel element (F2).

10. Bicycle drive (20) according to Claim 9, **characterized in that** the second planet carrier (62) can be connected for conjoint rotation with the output of the planetary transmission (26) by means of the second freewheel element (F2).

11. Bicycle drive (20) according to one of the preceding claims, **characterized in that** the first planet carrier (42) is permanently connected for conjoint rotation with the second sun gear (64).

12. Bicycle drive (20) according to one of the preceding claims, **characterized in that** the planetary transmission (26) has a transmission housing (32), which forms an abutment (84) for the second planetary gearset (38) axially on the output side.

13. Bicycle drive (20) according to one of the preceding claims, **characterized in that** the electric machine (22) is designed as an external rotor.

14. Bicycle having a wheel and a bicycle drive (20) according to one of the preceding claims, wherein the wheel can be driven by the bicycle drive (20).

## Revendications

1. Entraînement (20) de bicyclette présentant un moteur électrique (22), qui présente un arbre entraîné (24), présentant un arbre (28) de manivelle de pédalier et un engrenage planétaire (26), qui présente un entraînement, une partie entraînée, un premier train épicycloïdal (36) et un deuxième train épicycloïdal (38), l'entraînement (20) de bicyclette étant conçu pour une transmission du couple depuis l'arbre (28) de manivelle de pédalier à une roue d'une bicyclette, le premier train épicycloïdal (36) présentant une première roue à denture intérieure (40), un premier porte-satellites (42) sur lequel sont logées de manière rotative des premières roues planétaires (46) et une première roue solaire (44), le deuxième train épicycloïdal (38) présentant une deuxième roue à denture intérieure (60), un deuxième porte-satellites (62) sur lequel sont logées de manière rotative des premières roues planétaires (66) et une deuxième roue solaire (64), la première roue à denture intérieure (40) étant fixe, la deuxième roue à denture intérieure (60) étant fixe, la première roue solaire (44) formant l'entraînement de l'engrenage planétaire (26), l'entraînement (20) de bicyclette étant conçu pour une transmission du couple depuis l'arbre entraîné (24) du moteur électrique (22) à l'entraînement de l'engrenage planétaire (26), le deuxième porte-satellites (62) formant la partie entraînée de l'engrenage planétaire (26), l'entraînement (20) de bicyclette étant conçu pour une transmission du couple depuis la partie entraînée de l'engrenage planétaire (26) à la roue de la bicyclette, l'entraînement (20) de bicyclette étant conçu pour une transmission du couple depuis le premier porte-satellites (42) à la deuxième roue solaire (64), les premières roues planétaires (46) respectives étant conçues comme premiers satellites étagés et les deuxièmes roues planétaires (66) respectives étant conçues comme deuxièmes satellites étagés.

2. Entraînement (20) de bicyclette selon la revendication 1, **caractérisé en ce que** les premières roues planétaires étagées (46) respectives présentent une première zone d'engrenage (50), qui s'engrène avec la première roue à denture intérieure (40), et une deuxième zone d'engrenage (52), qui s'engrène avec la première roue solaire (44), et les deuxièmes roues planétaires étagées (66) respectives présentent une première zone d'engrenage (70), qui s'engrène avec la deuxième roue à denture intérieure (60), et une deuxième zone d'engrenage (72), qui s'engrène avec la deuxième roue solaire (64), les deuxièmes zones d'engrenage (52, 72) respectives présentant un diamètre d'action supérieur à celui des premières zones d'engrenage (50, 70) respectives.

3. Entraînement (20) de bicyclette selon la revendication 1 ou 2, **caractérisé en ce que** les premières roues planétaires étagées (46) respectives sont conçues de manière symétrique.

4. Entraînement (20) de bicyclette selon l'une des revendications précédentes, **caractérisé en ce que** les deuxièmes roues planétaires étagées (66) respectives sont conçues de manière symétrique.

5. Entraînement (20) de bicyclette selon l'une des revendications précédentes, **caractérisé en ce que** la première roue solaire (44) est reliée en permanence de manière solidaire en rotation au premier arbre entraîné (24) du moteur électrique (22).

6. Entraînement (20) de bicyclette selon l'une des revendications précédentes, **caractérisé en ce que** l'arbre (28) de manivelle de pédalier peut être relié de manière solidaire en rotation au moyen d'un premier élément de roue libre (F1) à la partie entraînée de l'engrenage planétaire (26).

7. Entraînement (20) de bicyclette selon la revendication 6, **caractérisé en ce que** le premier élément de roue libre (F1) est agencé axialement entre la première roue solaire (44) et la deuxième roue solaire (64).

8. Entraînement (20) de bicyclette selon l'une des revendications précédentes, **caractérisé en ce que** l'entraînement (20) de bicyclette présente un arbre intermédiaire (80), l'entraînement (20) de bicyclette étant conçu pour une transmission du couple depuis l'arbre (28) de manivelle de pédalier à une roue d'une bicyclette par l'intermédiaire de l'arbre intermédiaire (80) .

9. Entraînement (20) de bicyclette selon l'une des revendications précédentes, **caractérisé en ce que** l'arbre entraîné (24) du moteur électrique (22) peut être relié de manière solidaire en rotation à la partie entraînée de l'engrenage planétaire (26) au moyen d'un deuxième élément de roue libre (F2).

10. Entraînement (20) de bicyclette selon la revendication 9, **caractérisé en ce que** le deuxième porte-satellites (62) peut être relié de manière solidaire en rotation à la partie entraînée de l'engrenage planétaire (26) au moyen du deuxième élément de roue libre (F2).

11. Entraînement (20) de bicyclette selon l'une des revendications précédentes, **caractérisé en ce que** le premier porte-satellites (42) est relié en permanence de manière solidaire en rotation à la deuxième roue solaire (64).

12. Entraînement (20) de bicyclette selon l'une des revendications précédentes, **caractérisé en ce que** l'engrenage planétaire (26) présente un carter d'engrenage (32) qui forme axialement, côté entraîné, une butée (84) pour le deuxième train épicycloïdal (38).

13. Entraînement (20) de bicyclette selon l'une des revendications précédentes, **caractérisé en ce que** le moteur électrique (22) est conçu comme un rotor externe.

14. Bicyclette présentant une roue et un entraînement (20) de bicyclette selon l'une des revendications précédentes, la roue pouvant être entraînée par l'entraînement (20) de bicyclette.
